Europäisches Patentamt

European Patent Office

Office européen des brevets

(19)

(11) Veröffentlichungsnummer: **0 139 818**
**B1**

(12)
# EUROPÄISCHE PATENTSCHRIFT

(45) Veröffentlichungstag der Patentschrift:
**29.06.88**

(21) Anmeldenummer: **84103766.6**

(22) Anmeldetag: **05.04.84**

(51) Int. Cl.⁴: **F 16 F 9/08,** F 16 F 9/36,
B 62 K 25/04

(54) **Hydropneumatisches Federbein.**

(30) Priorität: **21.10.83 DE 3338334**

(43) Veröffentlichungstag der Anmeldung:
**08.05.85 Patentblatt 85/19**

(45) Bekanntmachung des Hinweises auf die Patenterteilung:
**29.06.88 Patentblatt 88/26**

(84) Benannte Vertragsstaaten:
**AT FR GB IT NL**

(56) Entgegenhaltungen:
**EP-A-0 041 342**
**DE-C-830 442**
**FR-A-2 152 891**
**FR-A-2 426 841**
**GB-A-2 113 798**
**US-A-3 127 158**

(73) Patentinhaber: **SEBAC INDUSTRIALE S.p.A., Via A. Costa, 114, I-40067 Rastignano (Bologna) (IT)**

(72) Erfinder: **SEBAC INDUSTRIALE S.p.A., Via A. Costa, 114, I-40067 Rastignano (Bologna) (IT)**

(74) Vertreter: **Puschmann, Heinz H., Sendlinger- Tor- Platz 11, D-8000 München 2 (DE)**

EP 0 139 818 B1

## Beschreibung

Die Erfindung betrifft ein hydropneumatisches Federbein mit einer Gasdruckfeder und einem Öldämpfer innerhalb eines Arbeitszylinders, in dem zwischen Gasdruck- und Öldruckraum ein Trennkolben angeordnet ist, und mit einem an einer in den Öldruckraum ragenden Kolbenstange angeordneten, doppelt wirkenden Dämpfungskolben mit bewegungsrichtungsabhängig wirksam werdenden Durchgangsöffnungen für das im Öldruckraum befindliche Öl.

Solche, allgemein als Einrohrdämpfer bezeichnete Federbeine sind grundsätzlich bekannt; vgl. MOTORRAD 26/78 "Motorrad-Technik", Fahrwerkkonstruktion.

Es ist ferner bekannt, einen Ausgleich für das von der in den Öldruckraum eintauchenden Kolbenstange verdrängte Ölvolumen dadurch zu schaffen, daß eine im Arbeitszylinder vor dem mit der Kolbenstange fest verbundenen Arbeitskolben angeordnete, hin- und herverschiebliche Dichtung während eines Dämpfungsvorganges über eine Feder dem sich ändernden Ölvolumen nachgeführt wird, um so ein Arbeiten des Öldruckdämpfers ohne Lufteinschluß über den gesamten Arbeitshub zu gewährleisten; vgl. De-C-830 442.

Eine derartige Ausbildung führt zu einer relativ großen Baulänge des Öldruckdämpfers, was dessen Einsatz in Verbindung mit sog. Cantilever-Federungen erschwert, die bei relativ großen Federwegen klein bauend ausgebildet sind.

Der Erfindung liegt die Aufgabe zugrunde, ein neues hydropneumatisches Federbein, insbesondere für den Einsatz in Verbindung mit Zweiradfahrzeugen, zu schaffen, das einfacher und kompakter als bisher, insbesondere hinsichtlich seines Volumenausgleiches für das Öl und seiner Längenausdehnung, ausgebildet ist, ohne die Feder- und Dämpfungseigenschaften zu verschlechtern und an Betriebssicherheit zu verlieren.

Ausgehend von einem hydropneumatischen Federbein der eingangs genannten Art ist diese Aufgabe erfindungsgemäß dadurch gelöst, daß der Trennkolben ein Kolbenhemd aufweist, dessen Innenmantelfläche die zylindrische Wandung des Öldruckraumes bildet, wobei die mit dem Arbeitszylinder ortsfest verbundene Kolbenstange eine Verschlußkappe für die offene Stirnseite des Trennkolbens durchsetzt und zwischen Kolbenstange und Verschlußkappe eine Dichtung angeordnet ist, die in einer Ausnehmung der Verschlußkappe hin- und herbeweglich ist.

In weiterer Ausbildung der Erfindung umfaßt der Trennkolben an seiner geschlossenen Stirnseite ein Montage-Auge und umfaßt mit seinem Kolbenhemd den Dämpfungskolben und weist die Trennkolben, Dämpfungskolben und Dichtung (Dichtring) koaxial durchsetzende Kolbenstange die beidseitig des Dämpfungskolbens befindlichen Öldruckräume verbindende Bohrungen auf.

Ferner trägt das Kolbenhemd des Trennkolbens an seiner Außenmantelfläche an der Innenmantelfläche des Arbeitszylinders anliegende Gleitrippen und an seiner offenen Stirnseite benachbart eine diese Flächen abdichtende Dichtung.

Mit der festen Stirnseite des Arbeitszylinders sind ein Lageranschluß und mit dem die bewegliche Stirnseite des Arbeitszylinders bildenden Trennkolben eine am Arbeitszylinder befestigte Rolldichtung verbunden, während die Verschlußkappe im Querschnitt napfförmig ausgebildet ist und der dem Öldruckraum zugewandte Boden Durchgangsöffnungen aufweist.

Schließlich trägt der Arbeitszylinder erfindungsgemäß ein mit dem Gasdruckraum kommunizierendes Sicherheitsventil.

Das erfindungsgemäße ausgebildete hydropneumatische Federbein zeichnet sich gegenüber dem Stand der Technik durch seine Kompaktheit aus, da durch die koaxiale Ausbildung von Trenn- und Dämpfungskolben eine geringere Bauhöhe als bisher erreicht wird, wobei durch relativ große Querschnitte der druckbeaufschlagten Flächen die Betriebsdrücke in beherrschbaren Grenzen zu halten sind. Da der den Dämpfungskolben koaxial umfassende Trennkolben mit seinem Kolbenhemd und seiner Verschlußkappe eine relativ starre Baugruppe bildet, können auch durch harte Stöße verursachte Druckspitzen im Öl wirkungsvoll aufgenommen und damit gedämpft werden. Auch bleibt der Vorteil eines lageunabhängigen Einbaus erhalten. Schließlich sind alle Bauteile als relativ einfache Drehteile ausgebildet, so daß eine hohe Fertigungsgenauigkeit bei geringen Fertigungskosten einzuhalten ist, was sich ebenfalls auf die Funktionstüchtigkeit und die Lebensdauer des Federbeines günstig auswirkt. Durch die geringe Bauhöhe oder -länge bedingt, eignet sich das erfinderische Federbein insbesondere für den Einsatz in einer Cantilever-Federung für Zweiradfahrzeuge, wo der notwendige Federweg durch geeignete Hebelübersetzungen erreichbar ist.

Die Erfindung ist nachfolgend anhand eines in der Zeichnung mehr oder minder schematisch dargestellten Ausführungsbeispiels beschrieben. Es zeigen:

Figur 1　einen Schnitt durch ein hydropneumatisches Federbein gemäß der Erfindung in einer teilweise eingedrückten Stellung,

Figur 2　einen Schnitt durch das Federbein nach Figur 1 in der vollständig eingedrückten Stellung und

Figur 3　einen Schnitt durch das Federbein nach Figur 1 in einer ausfahrenden Stellung.

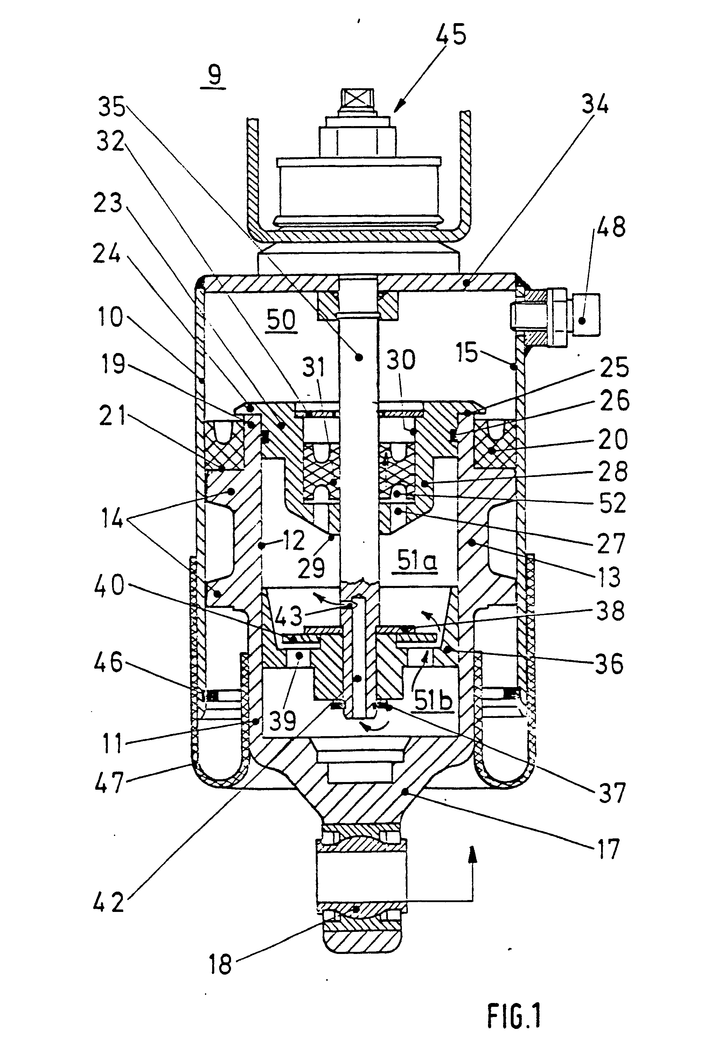

Ein insgesamt mit der Bezugsziffer 9 bezeichnetes hydropneumatisches Federbein weist, wie zum Beispiel Figur 1 zeigt, einen aus einem Rohrabschnitt bestehenden Arbeitszylinder 10 auf, in dem ein im Querschnitt U-förmiger Trennkolben 11 axial beweglich gelagert ist, dessen eine zylindrische Innenmantelfläche 12 aufweisendes Kolbenhemd 13 auf der Außenmantelfläche zwei im Abstand voneinander angeordnete Gleitrippen 14 trägt, die an der Innenmantelfläche 15 des Arbeitszylinders anliegen. Die geschlossene Stirnseite 17 des Trennkolbens 11 läuft in ein Montage-Auge 18 aus, während der offenen Stirnseite 19 benachbart eine zwischen Kolbenhemd und Innenmantelfläche des Arbeitszylinders dichtend anliegende Dichtung 20 innerhalb einer Ausnehmung 21 angeordnet ist. Der offenen Stirnseite 19 des Trennkolbens ist ferner eine im Querschnitt etwa napfförmige Verschlußkappe 23 zugeordnet, die mit einem stirnseitigen Flansch 24 auf der Stirnfläche 25 der Stirnseite 19 aufsitzt. Eine Ringdichtung 26 ist zwischen Außenwandung der Verschlußkappe und Innenmantelfläche 12 des Trennkolbens angeordnet. Die Außenwandung der Verschlußkappe 23 weist ferner einen Absatz 28 auf, der in den Löcher 27 aufweisenden Boden 29 der Verschlußkappe übergeht. In der Verschlußkappe ist eine zylindrische, von dem Boden 29 stirnseitig begrenzte Ausnehmung 30 vorgesehen, in der sich ein an der Wandung der Ausnehmung abstützender; im Querschnitt etwa H-förmiger Dichtring 31 befindet. Eine Begrenzungsscheibe 32 ist in der Ausnehmung 30 dem Flansch 24 benachbart angeordnet.

Die eine Stirnseite des Arbeitszylinders 10 ist von einer Platte 34 dicht verschlossen, in deren Zentrum eine den Arbeitszylinder, die Verschlußkappe und den Trennkolben axial durchsetzende Kolbenstange befestigt ist. Der Stirnseite der Kolbenstange benachbart ist auf dieser ein mit seiner Außenmantelfläche auf der Innenmantelfläche des Trennkolbens gleitender Dämpfungskolben 36 aufgeschoben und mittels Endscheiben 37 und 38 in seiner Lage gehalten.

Der Dämpfungskolben weist Durchgangsöffnungen 39 auf, die von bewegungsrichtungsabhängig öffnenden Ventilscheiben 40 verschlossen sind. Da die Endscheibe 38 einen größeren Durchmesser als der Nabenbereich des Dämpfungskolbens aufweist, wirkt diese als Begrenzung für die Öffnungsbewegung der Ventilscheiben.

In der Kolbenstange 35 ist ferner eine die freie Stirnseite durchsetzende axiale Bohrung 42 angeordnet, die mit einer radialen Bohrung 43 oberhalb der Endscheibe 38 kommuniziert.

Die Platte 34 des Arbeitszylinders 10 weist ferner einen Lageranschluß 45 auf. Der offenen Stirnseite des Arbeitszylinders 10 benachbart ist in der Innenmantelfläche 15 ein das vollständige Ausfahren des Trennkolbens 11 verhindernder Sprengring 46 und eine an der Außenmantelfläche am Trennkolben befestigte Rolldichtung 47 angeordnet.

Schließlich ist, der Platte 34 benachbart, mit dem Arbeitszylinder 10 ein mit seinem inneren kommunizierendes Sicherheitsventil 48 verbunden.

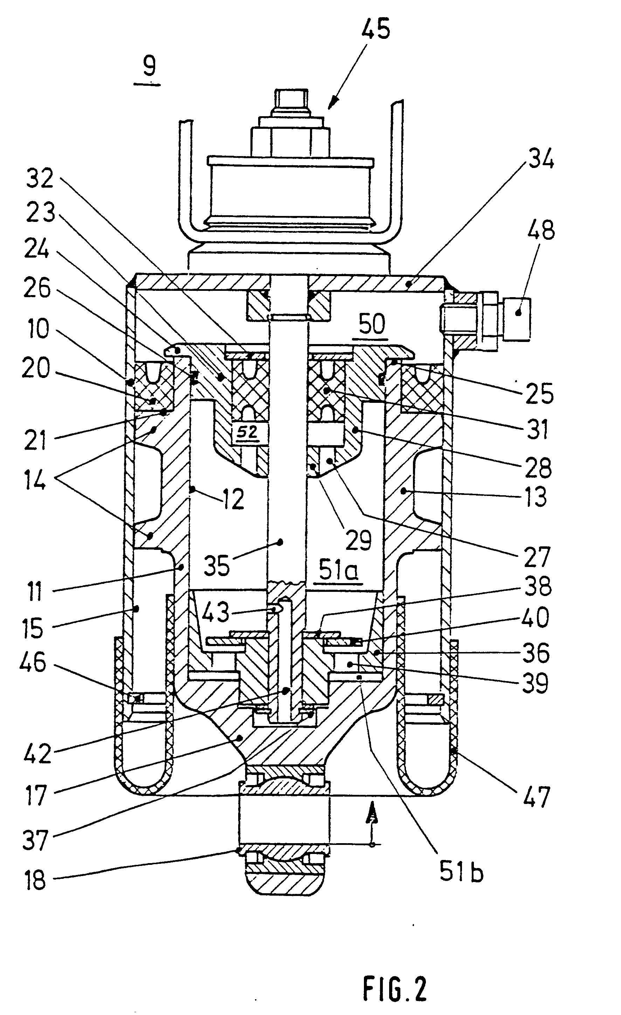

Der vor dem Trennkolben befindliche Innenraum des Arbeitszylinders bildet eine vorzugsweise mit Stickstoff gefüllte Gasdruckkammer 50, während der von der Innenmantelfläche 12 des Trennkolbens 11 begrenzte zylindrische Raum eine durch den Dämpfungskolben 36 in zwei Bereiche 51a, 51b unterteilte, mit Öl gefüllte Öldruckkammer 51 bildet; die Ausnehmung 30 in der Verschlußkappe 23 dagegen bildet einen Ausgleichsraum 52 - vgl. Figur 2 - für das während der Bewegungen des Trennkolbens 11 durch das Volumen der Kolbenstange verdrängte Ölvolumen in der Öldruckkammer 51, und zwar in dem Bereich zwischen dem Boden 29 der Verschlußkappe 23 und dem Dichtring 31.

Die Wirkungsweise des beschriebenen hydropneumatischen Federbeines ist folgende:

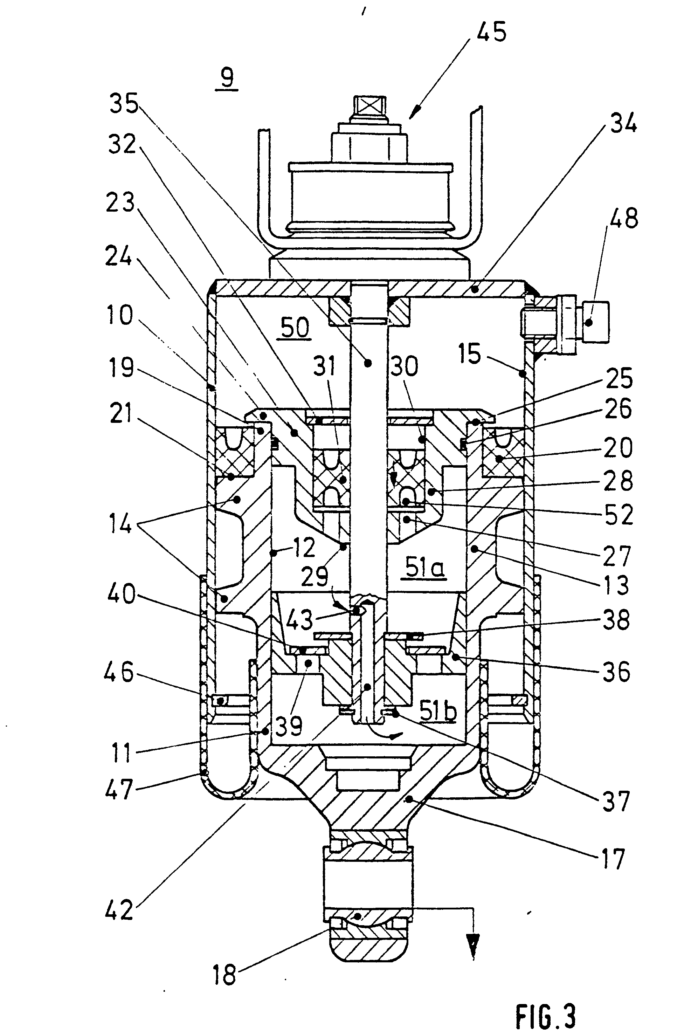

Das in der Gasdruckkammer 50 befindliche, unter Druck stehende Gas hält im Normalzustand die Teile des Federbeines etwa in der in Figur 3 dargestellten Lage, in der der Trennkolben im Arbeitszylinder 10 in bezug auf Figur 3 in Richtung des Pfeiles seine unterste Lage einnimmt und über die Bohrungen 42 und 43 ein Ausgleich des in der Öldruckkammer 51 befindlichen Öls in Pfeilrichtung zwischen den Bereichen 51a und 51b stattgefunden hat. Durch den Gasdruck ist auch der Dichtring 31 in seine in bezug auf Figur 3 unterste Lage bewegt worden, so daß annähernd alles Öl aus dem Ausgleichsraum 52 über die Löcher 27 in den Bereich 51a der Öldruckkammer 51 in Pfeilrichtung geflossen ist.

Wirken Kräfte in Richtung des in Figur 1, dargestellten Pfeiles auf das Federbein, wird der Trennkolben in bezug auf Figur 1 nach oben gegen den Gasdruck in der Gasdruckkammer 50 bewegt. Damit verkleinert sich der Bereich 51b der Öldruckkammer 51 und das Öl strömt in Richtung der in Figur 1 dargestellten Pfeile in den Bereich 51a, und zwar sowohl durch die nunmehr sich öffnenden Durchgangsöffnungen 39, als auch durch die Bohrungen 42, 43. Gleichzeitig verdrängt die in den Bereich 51a eintretende Kolbenstange ihren Volumenanteil an Öl, das zusätzlich in den Bereich 51a fließt und von dort in den Ausgleichsraum 52 eintritt und dabei den Dichtring 31 in bezug auf Figur 1 ebenfalls entgegen dem Gasdruck nach oben bewegt.

Den infolge Lasteinwirkung vollständig eingefahrenen Zustand zeigt Figur 2, in dem der Dämpfungskolben am Trennkolben nahezu zur Anlage gelangt.

Im Ausmaße der nachgebenden Lasteinwirkung drückt das als Feder wirkende komprimierte Gasvolumen den Trennkolben in die in Figur 3 dargestellte Lage.

Durch das Sicherheitsventil 48 wird der Gasdruck auf einen vorbestimmten Wert begrenzt.

Aus dem Vorstehenden ist ohne weiteres ersichtlich, daß die als H-förmiger Dichtring ausgebildete, auf der Kolbenstange 35 hin- und herbewegliche Dichtung 31 auf einfachste Weise nicht nur das Gas- vom Ölvolumen trennt, sondern gleichzeitig auch beim Rückweichen einen Ölausgleichsraum 52 in der Ausnehmung 30 freigibt, der das von der Kolbenstange verdrängte Öl aufnimmt, und daß durch die koaxiale Anordnung von Trenn- und Dämpfungskolben 11 und 36 eine äußerst kompakte und kurzbauende Ausbildung des Federbeines sich ergibt.

**Patentansprüche**

1. Hydropneumatisches Federbein (9) mit einer Gasdruckfeder und einem Öldämpfer innerhalb eines Arbeitszylinders (10), in dem zwischen Gasdruck- und Öldruckraum (50, 51) ein Trennkolben (11) angeordnet ist, und mit einem an einer in den Öldruckraum (51) ragenden Kolbenstange (35) angeordneten, doppelt wirkenden Dämpfungskolben (36) mit bewegungsrichtungsabhängig wirksam werdenden Durchgangsöffnungen (39) für das im Öldruckraum (51) befindliche Öl, dadurch gekennzeichnet, daß der Trennkolben (11) ein Kolbenhemd (13) aufweist, dessen Innenmantelfläche (12) die zylindrische Wandung des Öldruckraumes (51) bildet, wobei die mit dem Arbeitszylinder (10) ortsfest verbundene Kolbenstange (35) eine Verschlußkappe (23) für die offene Stirnseite des Trennkolbens (11) durchsetzt und zwischen Kolbenstange und Verschlußkappe eine Dichtung (31) angeordnet ist, die in einer Ausnehmung (30) der Verschlußkappe (23) hin- und herbeweglich ist.

2. Federbein nach dem Anspruch 1, dadurch gekennzeichnet, daß der Trennkolben (11) an seiner geschlossenen Stirnseite (17) ein Montage-Auge (18) trägt und mit seinem Kolbenhemd (13) den Dämpfungskolben (36) umfaßt.

3. Federbein nach den Ansprüchen 1 oder 2, dadurch gekennzeichnet, daß die Trennkolben (11), Dämpfungskolben (36) und Dichtung (Dichtring 31) koaxial durchsetzende Kolbenstange (35) die beidseitig des Dämpfungskolbens (36) befindlichen Öldruckräume (51a, 51b) verbindende Bohrungen (42, 43) aufweist.

4. Federbein nach den Ansprüchen 1 bis 3, dadurch gekennzeichnet, daß das Kolbenhemd (13) des Trennkolbens (11) an seiner Außenmantelfläche an der Innenmantelfläche (15) des Arbeitszylinders (10) anliegende Gleitrippen (14) und an seiner offenen Stirnseite benachbart eine diese Flächen abdichtende Dichtung (20) trägt.

5. Federbein nach den Ansprüchen 1 bis 4, dadurch gekennzeichnet, daß mit der festen Stirnseite (34) des Arbeitszylinders (10) ein Lageranschluß (45) und mit dem die bewegliche Stirnseite des Arbeitszylinders (10) bildenden Trennkolben (11) eine am Arbeitszylinder (10) befestigte Rolldichtung (47) verbunden sind.

6. Federbein nach dem Anspruch 1, dadurch gekennzeichnet, daß die Verschlußkappe (23) im Querschnitt napfförmig ausgebildet ist, und daß der dem Öldruckraum (51a) zugewandte Boden (29) Durchgangsöffnungen (27) aufweist.

7. Federbein nach einem der vorhergehenden Ansprüche, dadurch gekennzeichnet, daß der Arbeitszylinder (10) ein mit dem Gasdruckraum (50) kommunizierendes Sicherheitsventil (48) trägt.

**Claims**

1. A hydropneumatic spring strut (9) comprising a gas compression spring and an oil damper in a work cylinder (10) in which a separating piston (11) is disposed between a gas pressure chamber (50) and an oil pressure chamber (51), a double-acting damping piston (36) being disposed on a piston rod (35) extending into the oil pressure chamber (51), the damping piston (36) being formed with orifices (39) for the oil present in the oil pressure chamber (51), the orifices (39) being operative in dependence upon the direction of damping piston movement, characterised in that the separating piston (11) has a skirt (13) whose inner generated surface (12) is operative as the cylindrical wall of the oil pressure chamber (51), the piston rod (35) which is fixedly connected to the work cylinder (10) extending through a closure cap (23) for the open end face of the separating piston (11), a seal (31) being disposed between the piston rod and closure cap and being reciprocable in a recess (30) therein.

2. A strut according to claim 1, characterised in that the separating piston (11) has an assembly lug or eye (18) on its closed end face (17) and its skirt (13) extends around the damping piston (36).

3. A strut according to claim 1 or 2, characterised in that the piston rod (35) extending axially through the separating piston (11), damping piston (36) and seal (ring seal 31) is formed with bores (42, 43) interconnecting the oil pressure chambers (51a, 51b) disposed on either side of the damping piston (36).

4. A strut according to claims 1 3, characterised in that the separating piston skirt (13) has on its outside generated surface: sliding ribs (14) engaging the inner generated surface (15) of the work cylinder (10); and, adjacent its open end face, a seal (20) sealing these surfaces.

5. A strut according to claims 1 - 4, characterised in that a bearing connection (45) is connected to the stationary end face (34) of the work cylinder (10) and a rolling seal (47) secured to the work cylinder (10) is connected to the separating piston (11) which is operative as the moving end face of the work cylinder (10).

6. A strut according to claim 1, characterised in that the cap (23) is in cross-section cup-shaped and the end (29) near the oil pressure chamber (51a) is formed with orifices (27).

7. A strut according to any of the previous claims, characterised in that the work cylinder (10) has a safety valve (48) which communicates with the gas pressure chamber (50).


**Revendications**

1. Bras élastique hydropneumatique (9) comportant un ressort à gaz comprimé et un amortisseur hydraulique à l'intérieur d'un cylindre de travail (10) dans lequel est disposé un piston de séparation (11) entre l'espace sous pression de gaz et l'espace d'huile (50, 51), et comportant un piston amortisseur à double effet (36) raccordé à une tige de piston (35) pénétrant dans l'espace sous pression d'huile (51) et muni de lumières traversantes (39) pour l'huile se trouvant dans l'espace sous pression d'huile (51) et qui entrent en action en fonction du sens de déplacement, caractérisé ence que le piston de séparation (11) présente une chemise de piston (13) dont la surface de manteau interne (12) forme la cloison cylindrique de l'espace sous pression d'huile (51), la tige de piston (35), solidaire du cylindre de travail (10) traversant un chapeau (23) de fermeture de la face frontale ouverte du piston de séparation (11) et comportant, entre la tige de piston et le chapeau de fermeture, un joint d'étanchéité (31) mobile dans les deux sens dans un alésage (30) du chapeau de fermeture (23).

2. Bras élastique suivant la revendication 1, caractérisé en ce que le piston de séparation (11) porte, sur sa face frontale fermée (17), un oeilleton de montage (18) et enveloppe le piston amortisseur (36) avec sa chemise de piston (13).

3. Bras élastique suivant l'une quelconque des revendications 1 ou 2, caractérisé en ce que le piston de séparation (11), le piston amortisseur (36) et la tige de piston (35) traversant coaxialement le joint d'étanchéité (anneau d'étanchéité 31) présentent les perçages (42, 43) reliant les espaces sous pression d'huile (51a, 51b) se trouvant de part et d'autre du piston amortisseur (36).

4. Bras élastique suivant l'une quelconque des revendications 1 à 3, caractérisé en ce que la chemise de piston (13) du piston séparateur (11) porte, sur la surface de son manteau extérieur, des nervures de glissement (14) en contact avec la surface du manteau intérieur (15) du cylindre de travail (10) et elle porte, contigu à sa face frontale ouverte, un joint (20) assurant l'étanchéité de cette surface.

5. Bras élastique suivant l'une quelconque des revendications 1 à 4, caractérisé en ce qu'une liaison à palier (45) est reliée avec la face frontale fixe (34) du cylindre de travail (10) et un joint annulaire roulé (47), fixé au cylindre de travail (10), est relié avec le cylindre séparateur (11) formant la face frontale mobile du cylindre de travail (10).

6. Bras élastique suivant la revendication 1 caractérisé en ce que le chapeau de fermeture (23) est, en coupe, en forme de coupelle et en ce que sa face (29) tournée vers l'espace sous pression d'huile (51a) présente des lumières de passage (27).

7. Bras élastique suivant l'une quelconque des revendications précédentes, caractérisé en ce que le cylindre de travail (10) porte une soupape de sûreté (48) en communication avec l'espace sous pression de gaz (50).

0 139 818

FIG.1

FIG.2

0 139 818

FIG.3